(19) Europäisches Patentamt
European Patent Office
Office européen des brevets

(11) EP 3 546 055 B1

(12) **EUROPEAN PATENT SPECIFICATION**

(45) Date of publication and mention of the grant of the patent:
**13.01.2021 Bulletin 2021/02**

(51) Int Cl.:
***B01D 53/70*** *(2006.01)* ***H01B 3/56*** *(2006.01)*

(21) Application number: **18164517.7**

(22) Date of filing: **28.03.2018**

(54) **METHOD AND SYSTEM FOR DECOMPOSING A FLUOROKETONE INTO DISPOSABLE DECOMPOSITION PRODUCTS**

VERFAHREN UND SYSTEM ZUR ZERSETZUNG EINES FLUOROKETONS IN WEGWERFBARE ABBAUPRODUKTE

PROCÉDÉ ET SYSTÈME POUR DÉCOMPOSER UNE FLUOROCÉTONE EN PRODUITS DE DÉCOMPOSITION JETABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(73) Proprietor: **ABB Schweiz AG**
**5400 Baden (CH)**

(72) Inventors:
- **DI-GIANNI, Anna**
  **5405 Dättwil (CH)**
- **Hyrenbach, Maik**
  **40878 Ratingen (DE)**
- **Gautschi, Simon**
  **5408 Ennetbaden (CH)**

(74) Representative: **Schaad, Balass, Menzl & Partner AG**
**Dufourstrasse 101**
**Postfach**
**8034 Zürich (CH)**

(56) References cited:
**EP-A1- 0 771 579**
**EP-A1- 2 904 617**
**WO-A1-2014/174328**
**WO-A1-2015/177149**
**US-A- 2 807 646**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a method for decomposing a fluoroketone, in particular a fluoroketone containing exactly five carbon atoms, into disposable decomposition products. It further relates to a fluoroketone decomposition system as well as to an assembly of a fluoroketone decomposition system and an educt container, the latter being in particular a housing of an electrical apparatus.

Dielectric insulation media in liquid or gaseous state are conventionally applied for the insulation of an electrical component in a wide variety of electrical apparatuses, such as for example switchgears, gas-insulated substations (GIS), gas-insulated lines (GIL), or transformers.

In medium or high voltage metal-encapsulated switchgears, for example, the electrical component is arranged in a gas-tight housing, which defines an insulating space, said insulation space comprising an insulation gas and separating the housing from the electrical component without letting electrical current to pass through. For interrupting the current in high voltage switchgear, the insulating gas further functions as an arc extinction gas.

Recently, the use of organofluorine compounds in an insulating gas has been suggested. Specifically, WO-A-2010/ 142346 discloses a dielectric insulation medium comprising a fluoroketone having from 4 to 12 carbon atoms. Furthermore, WO-A-2012/080246 discloses a fluoroketone containing exactly 5 carbon atoms (hereinafter referred to as "C5-FK") in a mixture with a dielectric insulation gas component different from the C5K to be particularly preferred.

The fluoroketones according to WO-A-2010/142346, and in particular according to WO-A-2012/080246, have been shown to have high insulation capabilities, specifically a high dielectric strength, as well as high arc extinction capabilities. At the same time, they have a very low Global Warming Potential (GWP) and very low toxicity. The combination of these characteristics renders these organofluorine compounds highly suitable as a substitute for $SF_6$ (sulphur hexafluoride), which has commonly been used as a dielectric insulation medium, but which is known to have a high GWP.

Despite of the ecological friendliness of the fluoroketones according to WO-A-2010/142346, and in particular WO-A-2012/080246, an intentional release of the compound at the end of the lifetime of the apparatus is not recommended.

One approach to handle the remaining fluoroketone in the insulation medium at the end of the lifetime is to recycle it. In this regard, the approach according to WO-A-2017/029338 may be chosen, relating to a method for reclaiming at least one substance from an insulation medium of an electrical apparatus. The method according to WO-A-2017/029338 comprises the subsequent steps of:

a) transferring an initial gas mixture containing the organofluorine compound and at least one further component of the insulation medium into a substance reclaiming device,

b) liquefying the organofluorine compound in the substance reclaiming device by
b1) compressing the initial gas mixture, and
b2) cooling the compressed initial gas mixture down to a temperature at which the organofluorine compound liquefies,

c) separating the liquefied organofluorine compound from the remaining gas comprising the at least one remaining component of the initial gas mixture, and

d) expanding the remaining gas via a balancing valve and reintroducing at least a portion of the remaining gas back into the insulation space.

Although the technique according to WO-A-2017/029338 allows the recycling of the fluoroketone, relatively complex separation techniques are required for recovering it in pure form, which renders the technique laborious.

One other approach would be to incinerate the fluoroketone in a specifically equipped incineration plant. This would, however, require collection of the used gas mixtures from different sites of operation, which goes along with relative complex logistics and high transportation costs.

EP 0 771 579 A1 relates to a method for decomposing a halide contained in a gas, the method comprising the step of bringing the gas into contact, at a temperature of at least 300°C, with a first mixture consisting essentially of 0.05-40 wt% of potassium hydroxide and at least one compound selected from the group consisting of alkali-earth-metal oxides and alkali-earth-metal hydroxides

US 2 807 646 A relates to a process for making a perchlorofluoro acetone by introducing a substantially anhydrous gas-phase mixture of HF and a starting material comprising a perhalogenated chloroacetone containing 3 fluorine atoms at most into a reaction zone containing a substantially anhydrous catalyst.

Further, EP 2 904 617 relates to an apparatus for the generation, the distribution and/or the usage of electrical energy comprising a housing enclosing an insulating space containing a dielectric insulation gas, the apparatus further comprising a molecular sieve having an average pore size greater than the molecular size of at least one decomposition product of the organofluorine compound generated during operation of the apparatus.

In consideration of the drawbacks mentioned above, the problem to be solved by the present invention is thus to provide a simple and efficient method for converting the fluoroketone into a form, in which it can be safely disposed. In particular, a simple method and system for emptying an apparatus, in which a fluoroketone-containing insulation or arc-extinction medium is used, shall be provided, specifically for emptying the apparatus at its end of lifetime.

The problem is solved by the subject-matter of independent claim 1. Preferred embodiments are defined in the dependent claims, claim combinations, and in the description and accompanying drawings.

According to the method of claim 1, a fluoroketone, and in particular a fluoroketone containing exactly five carbon atoms, is decomposed into disposable decomposition products by bringing an initial gas mixture containing the fluoroketone into contact with a base B1, the pKa value of the respective conjugate acid being higher than 11.

Preferably, a base B1 is used, the respective conjugate acid of which having a pKa value higher than 14 and more preferably a pKa value of at least 17. According to the present invention, an alcoholate is used as base B1, preferably a sterically hindered alcoholate, more preferably a tert-butoxide, and specifically potassium tert-butoxide (the conjugate acid of which has a pKa value of 17).

It has been found that by using a base B1 according to the above definition, and in particular potassium tert-butoxide, a very efficient decomposition of the fluoroketone can be achieved, allowing to relative fast obtain a disposable gas mixture, which can be released to the atmosphere without negative consequences.

As known to the skilled person, the "pKa value" refers to the acid dissociation constant at logarithmic scale, according to the equation:

$$pKa = -\log_{10}(Ka)$$

with Ka being the dissociation constant of the acid.

As a rule, acids having a pKa value in the range of -2 to 12 in water are designated "weak acids", whereas acids with a pKa value of less than about -2 are designated "strong acids". Since the conjugate acid of base B1 (having a pKa value of higher than 11) is weak, preferably very weak, the base B1 is thus a strong base, preferably a very strong base within this terminology.

Generally, the fluoroketone and the decomposition products generated by the process of the present invention is gaseous at ambient temperature and pressure. The term "dispose" as used in the context of the present invention thus generally relates to a release of the decomposition products into the atmosphere.

The term "disposable" hence typically means that the respective gaseous substance exhibits no or only negligible GWP, Ozone Depletion Potential (ODP) and toxicity, such that its release into the atmosphere has no negative consequences on the environment and in particular does not contribute to the "greenhouse effect".

The term "initial gas mixture" as used in the context of this invention shall be interpreted broadly and encompasses any possible gas mixture containing the fluoroketone, but in particular relates to a fluoroketone-containing insulation or arc-extinction medium, specifically at the end of lifetime of the apparatus, in which it is used.

More particular, the "initial gas mixture" comprises apart from the fluoroketone at least one further component, specifically a background gas (or "carrier gas") or a background gas component, and/or decomposition products generated from decomposition of the fluoroketone.

The term "fluoroketone" as used in the context of this invention shall be interpreted broadly and shall encompass both perfluoroketones and hydrofluoroketones, and shall further encompass both saturated compounds and unsaturated compounds, i.e. compounds including double and/or triple bonds between carbon atoms. The at least partially fluorinated alkyl chain of the fluoroketones can be linear or branched, or can form a ring, which optionally is substituted by one or more alkyl groups. In exemplary embodiments, the fluoroketone is a perfluoroketone. In further exemplary embodiment, the fluoroketone has a branched alkyl chain, in particular an at least partially fluorinated alkyl chain. In still further exemplary embodiments, the fluoroketone is a fully saturated compound.

According to another aspect, the initial gas mixture according to the present invention can comprise a fluoroketone having from 4 to 12 carbon atoms, the at least partially fluorinated alkyl chain of the fluoroketone forming a ring, which is optionally substituted by one or more alkyl groups.

It is particularly preferred that the insulation medium comprises a fluoroketone containing exactly five or exactly six carbon atoms or mixtures thereof. Compared to fluoroketones having a greater chain length with more than six carbon atoms, fluoroketones containing five or six carbon atoms have the advantage of a relatively low boiling point, allowing to avoid liquefaction under operational conditions. Nevertheless, the boiling point of this fluoroketone is still high enough to allow liquefaction by means of the liquefaction device of the present invention.

According to embodiments, the fluoroketone is at least one compound selected from the group consisting of the compounds defined by the following structural formulae in which at least one hydrogen atom is substituted with a fluorine atom:

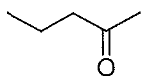
(Ia)

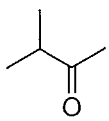
(Ib)

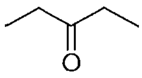

(Ic)

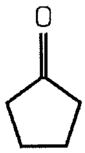

(Id)

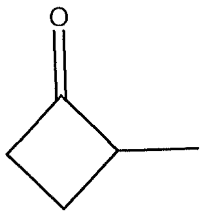

(Ie)

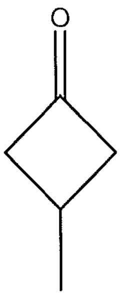

(If)

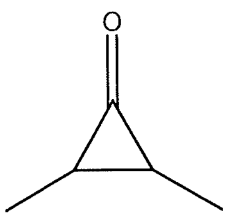

(Ig)

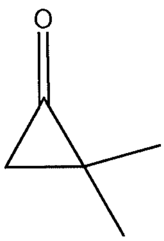

(Ih)

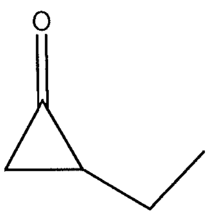

(Ii)

Fluoroketones containing five or more carbon atoms are further advantageous, because they are generally non-toxic with outstanding margins for human safety. This is in contrast to fluoroketones having less than four carbon atoms, such as hexafluoroacetone (or hexafluoropropanone), which are toxic and very reactive. In particular, fluoroketones containing exactly five carbon atoms, herein briefly named fluoroketones a), and fluoroketones containing exactly six carbon atoms are thermally stable up to 500°C.

According to a specific embodiment, the initial gas mixture according to the present invention, in particular comprising a fluoroketone having exactly 5 carbon atoms, can further comprise a background gas, in particular selected from the group consisting of: air, air component, nitrogen, oxygen, carbon dioxide, a nitrogen oxide (including but not limited to $NO_2$, NO, $N_2O$), and mixtures thereof.

In embodiments of this invention, the fluoroketones, in particular fluoroketones a), having a branched alkyl chain are preferred, because their boiling points are lower than the boiling points of the corresponding compounds (i.e. compounds with same molecular formula) having a straight alkyl chain.

According to embodiments, the fluoroketone a) is a perfluoroketone, in particular has the molecular formula $C_5F_{10}O$, i.e. is fully saturated without double or triple bonds between carbon atoms. The fluoroketone a) may preferably be selected from the group consisting of 1,1,1,3,4,4,4-heptafluoro-3-(trifluoromethyl)butan-2-one (also named deca-fluoro-2-methylbutan-3-one), 1,1,1,3,3,4,4,5,5,5-decafluoro-pentan-2-one, 1,1,1,2,2,4,4,5,5,5-decafluoropentan-3-one and octafluorocylcopentanone, and most preferably is 1,1,1,3,4,4,4-heptafluoro-3-(trifluoromethyl)butan-2-one.

1,1,1,3,4,4,4-heptafluoro-3-(trifluoromethyl)butan-2-one can be represented by the following structural formula (I):

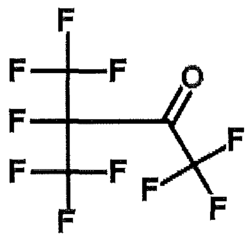

(I)

1,1,1,3,4,4,4-heptafluoro-3-(trifluoromethyl)butan-2-one, here briefly called "C5-ketone", with molecular formula $CF_3C(O)CF(CF_3)_2$ or $C_5F_{10}O$, has been found to be particularly preferred for high and medium voltage insulation applications, because it has the advantages of high dielectric insulation performance, in particular in mixtures with a dielectric carrier gas, has very low GWP and has a low boiling point. It has an ODP

of 0 and is practically non-toxic.

According to embodiments, even higher insulation capabilities can be achieved by combining the mixture of different fluoroketone components. In embodiments, a fluoroketone containing exactly five carbon atoms, as described above and here briefly called fluoroketone a), and a fluoroketone containing exactly six carbon atoms or exactly seven carbon atoms, here briefly named fluoroketone c), can favourably be part of the dielectric insulation at the same time. Thus, an insulation medium can be achieved having more than one fluoroketone, each contributing by itself to the dielectric strength of the insulation medium.

In embodiments, the further fluoroketone c) is at least one compound selected from the group consisting of the compounds defined by the following structural formulae in which at least one hydrogen atom is substituted with a fluorine atom:

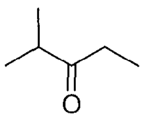
(IIa),

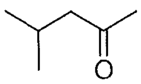
(IIb),

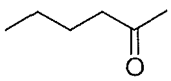
(IIc),

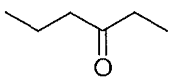
(IId),

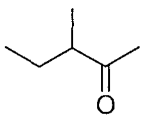
(IIe),

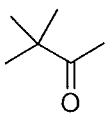
(IIf), and

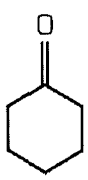
(IIg),

as well as any fluoroketone having exactly 6 carbon atoms, in which the at least partially fluorinated alkyl chain of the fluoroketone forms a ring, which is substituted by one or more alkyl groups (IIh);

and/or is at least one compound selected from the group consisting of the compounds defined by the following structural formulae in which at least one hydrogen atom is substituted with a fluorine atom:

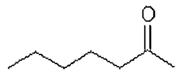
(IIIa),

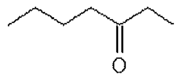
(IIIb),

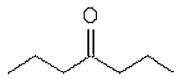
(IIIc),

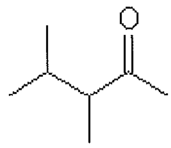
(IIId),

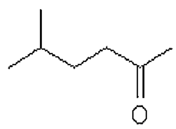
(IIIe),

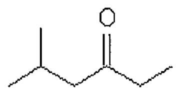
(IIIf),

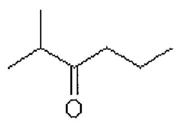
(IIIg),

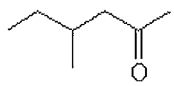
(IIIh),

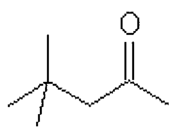
(IIIi),

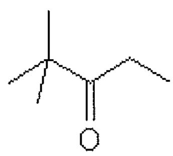
(IIIj),

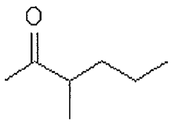

(IIIk),

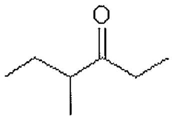

(IIIl),

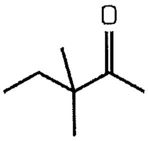

(IIIm),

and

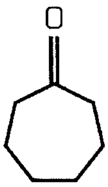

(IIIn),

in particular dodecafluoro-cycloheptanone, as well as any fluoroketone having exactly 7 carbon atoms, in which the at least partially fluorinated alkyl chain of the fluoroketone forms a ring, which is substituted by one or more alkyl groups (IIIo).

The present invention encompasses each compound or each combination of compounds selected from the group consisting of the compounds according to structural formulae (Ia) to (Ii), (IIa) to (IIh), (IIIa) to (IIIo), and mixtures thereof, and in particular with the gas mixture further comprising a background gas, which is preferably selected from the group consisting of: air, air component, nitrogen, oxygen, carbon dioxide, a nitrogen oxide (including but not limited to $NO_2$, NO, $N_2O$), and mixtures thereof.

According to another aspect, the initial gas mixture according to the present invention can comprise a fluoroketone having exactly 6 carbon atoms, in which the at least partially fluorinated alkyl chain of the fluoroketone forms a ring, optionally substituted by one or more alkyl groups.

As mentioned, such insulation medium can comprise a background gas, in particular selected from the group consisting of: air, air component, nitrogen, oxygen, carbon dioxide, a nitrogen oxide (including but not limited to $NO_2$, NO, $N_2O$), and mixtures thereof. Furthermore, an electrical apparatus comprising such an insulation medium is disclosed.

According to still another aspect, the initial gas mixture according to the present invention can comprise a fluoroketone having exactly 7 carbon atoms, in which the at least partially fluorinated alkyl chain of the fluoroketone forms a ring, optionally substituted by one or more alkyl groups. Furthermore, such an insulation medium can comprise a background gas, as mentioned above, in particular selected from the group consisting of: air, air component, nitrogen, oxygen, carbon dioxide, a nitrogen oxide (including but not limited to $NO_2$, NO, $N_2O$), and mixtures thereof. Furthermore, an electrical apparatus comprising such a dielectric insulation fluid is disclosed.

Depending on the specific application of the electrical component of the apparatus of the present invention, a fluoroketone containing exactly six carbon atoms (falling under the designation "fluoroketone c)" mentioned above) may be preferred for the respective insulation space compartment; such a fluoroketone is non-toxic, with outstanding margins for human safety.

In embodiments, fluoroketone c), alike fluoroketone a), is a perfluoroketone, and/or has a branched alkyl chain, in particular an at least partially fluorinated alkyl chain, and/or the fluoroketone c) contains fully saturated compounds. In particular, the fluoroketone c) has the molecular formula $C_6F_{12}O$, i.e. is fully saturated without double or triple bonds between carbon atoms. More preferably, the fluoroketone c) can be selected from the group consisting of 1,1,1,2,4,4,5,5,5-nonafluoro-2-(trifluoromethyl)pentan-3-one (also named dodecafluoro-2-methylpentan-3-one), 1,1,1,3,3,4,5,5,5-nonafluoro-4-(trifluoromethyl)pentan-2-one (also named dodecafluoro-4-methylpentan-2-one), 1,1,1,3,4,4,5,5,5-nonafluoro-3-(trifluoromethyl)pentan-2-one (also named dodecafluoro-3-methylpentan-2-one), 1,1,1,4,4,4-hexafluoro-3,3-bis-(trifluoromethyl)butan-2-one (also named dodecafluoro-3,3-(dimethyl)butan-2-one), dodecafluorohexan-2-one, dodecafluorohexan-3-one and decafluorocyclohexanone (with sum formula $C_6F_{10}O$), and particularly is the mentioned 1,1,1,2,4,4,5,5,5-nonafluoro-2-(trifluoromethyl)pentan-3-one.

1,1,1,2,4,4,5,5,5-Nonafluoro-2-(trifluoromethyl)pentan-3-one (also named dodecafluoro-2-methylpentan-3-one) can be represented by the following structural formula (II):

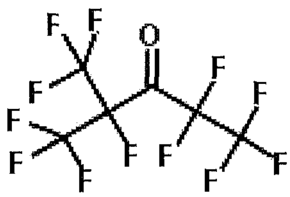

(II)

1,1,1,2,4,4,5,5,5-Nonafluoro-4-(trifluoromethyl)pentan-3-one (here briefly called "C6-ketone", with molecular formula $C_2F_5C(O)CF(CF_3)_2$) has been found to be particularly preferred for high voltage insulation applications because of its high insulating properties and its extremely low GWP. Specifically, its pressure-reduced breakdown field strength is around 240 kV/(cm*bar), which is much higher than the one of air having a much lower dielectric strength ($E_{cr}$ = 25 kV/(cm*bar). It has an ozone depletion potential of 0 and is non-toxic. Thus, the environmental impact is much lower than when using $SF_6$, and at the same time outstanding margins for human safety are achieved.

According to a particularly preferred embodiment of the method according to the present invention, the initial gas mixture is brought into contact with an excess amount of base B1 in relation to the amount of fluoroketone to be decomposed.

In particular when using potassium tert-butoxide, an excess amount of base B1 not only allows for a particularly efficient fluoroketone decomposition. Surprisingly, it has also been found that by using an excess amount of base B1, lower amounts of free 2H-heptafluoropropane and hexafluoropropene are contained in the resulting gas mixture to be disposed. Hence, a disposable gas mixture which is substantially free of any toxic components can be achieved by the method of the present invention, as will be explained in further detail by way of the working examples discussed below. With regard to this preferred embodiment, the use of at least 2, preferably at least 3 equivalents of base B1 in relation to the amount of fluoroketone to be decomposed, has been turned out to be particularly preferred.

According to a straightforward and thus preferred embodiment, the initial gas mixture is passed through a filter containing the base B1. In this regard, it has further been found that the filter is preferably heated, since thereby an increase in the decomposition rate is achieved. Specifically, heating to a temperature in the range from 60°C to 100°C has been shown to be particularly preferred.

It has been found that in some cases, trifluoracetic acid (TFA) can be present after having brought the initial gas mixture into contact with the base B1. In order to remove TFA, the decomposition products generated by the reaction with the base B1 are, according to a further preferred embodiment, subsequently brought into contact with a neutralizing substance, in particular a base B2 different from the base B1. Generally, the base B2 is much weaker than the base B1 and typically is or contains an inorganic base, and specifically is an aqueous NaOH solution.

Apart from the method described above, the present invention also relates - according to a further aspect - to a fluoroketone decomposition system, i.e. decomposition device. The fluoroketone decomposition system comprises a gas line to be fluidly connected with an educt container containing the fluoroketone to be decomposed, said gas line opening into a product container for storing the decomposition products.

According to the invention, a filter comprising an alcoholate base B1 is arranged in the gas line, the pKa value of the respective conjugate acid being higher than 11, preferably higher than 14 and more preferably at least 17.

With regard to the preferred features defined above in the context of the method of the present invention, these features are likewise preferred for the fluoroketone decomposition system. In particular, potassium tert-butoxide is preferably used in the fluoroketone decomposition system. According to a further preferred embodiment, the fluoroketone decomposition system comprises a pump and/or a compressor to generate a gas flow from the educt container towards the product container. The gas flow can be determined by a flowmeter and is ideally adjusted in a manner that the contact of the initial gas mixture with the filter lasts sufficiently long for ensuring complete decomposition of the fluoroketone.

In analogy to what has been said above in the context of the method, the fluoroketone decomposition system preferably comprises heating means allocated to the filter, in order to 31.03.2020 allow for a higher decomposition rate and ultimately for a higher efficiency of the system.

According to a further preferred embodiment, a reactor comprising a neutralizing substance is arranged in the gas line downstream of the filter. By means of the reactor, TFA generated in the course of the fluoroketone decomposition can be neutralized and thus removed from the gas mixture to be disposed.

The present invention is illustrated by way of the following working example along with the figures, of which

Fig. 1 shows schematically an assembly according to the present invention comprising a fluoroketone decomposition system;

Fig. 2 relates to a diagram showing the amount of C5-FK (indicated by its respective chromatographic peak area) in a gas mixture after different periods of contacting the gas mixture with different amounts of tert-butylate (tert-butoxide) in a respective filter as well as after final heating of the filter;

Fig. 3 relates to a diagram showing the concentration of hexafluoropropene after several periods of contacting a gas mixture containing C5-FK with different amounts of tert-butylate (tert-butoxide) in a respective filter as well as after final heating of the filter;

Fig. 4 relates to a diagram showing the concentration of 2H-heptafluoropropane after several periods of contacting a gas mixture containing C5-FK with different amounts of tert-butylate (tert-butoxide) in a respective filter as well as after final heating of the filter; and

Fig. 5 relates to a chromatogram of the gas mixture resulting from the contacting with 3 equivalents of potassium tert-butoxide after 10 minutes of contacting and after additional heating.

According to Fig. 1, the assembly shown comprises a fluoroketone decomposition system 2, which is connected with an educt container 4 in the form of a tank 41, and which typically is the housing 411 of an electrical apparatus, in which a fluoroketone-containing insulation and/or arc extinction medium is used. Thus, Fig. 1 depicts the situation, where the housing of the electrical apparatus shall be emptied at the end of life of the insulation and/or arc extinction medium.

Specifically, the fluoroketone decomposition system 2 comprises a gas line 6, which is fluidly connected with the educt container 4 via an opening 8. For example, the gas line 6 can be in the form of a tube, which is fitting a respective socket or port of the educt container 4. A primary section 6a of the gas line leads to a filter 10 comprising the base B1, whereas a secondary section 6b arranged downstream of the filter 10 leads to a product container 12 (or product tank). As the case may be, a vacuum pump 14a or a compressor 14b is connected to the gas line 6. In addition, a flowmeter 16 is connected to the gas line 6 for determining the gas flow through the gas line. In the specific embodiment shown, the flowmeter 16 is connected to the primary section 6a and the vacuum pump or compressor 14a, 14b is connected to the secondary section 6b of the gas line.

During operation, a gas flow through the gas line 6 in direction from the educt container 4 towards the product container 12 is generated by means of the vacuum pump 14a (in case the pressure in container 4 is higher than 1 bar) or the compressor 14b (in case the pressure in container 4 is equal or lower than 1 bar). Thereby, the gas passes the filter 10, where fluoroketone, in particular C5-FK, is brought into contact and reacts with the base B1. Thus, disposable decomposition products are generated, in particular isobutene.

The gas mixture containing the disposable decomposition products is then guided through the second section 6b of the gas line 6 to the product container 12, where the gas mixture is collected and eventually released into the atmosphere.

The technical effect of the method of the present invention is shown by means of the following working example, in connection with Fig. 2 to 5.

According to the example, a stainless steel 500 ml autoclave was filled with 400 mbar of C5-FK, specifically 1,1,1,3,4,4,4-heptafluoro-3-(trifluoromethyl)butan-2-one (according to structural formula I given above). In addition, the autoclave was filled with technical air up to a total pressure of 2 bar.

Prior to gas filling, different amounts of potassium tertbutoxide (1, 2 and 3 equivalents with respect to the amount of C5-FK) were placed inside the autoclave.

A reference measurement of the gas composition was carried out using gas chromatography-mass spectrometry (GC-MS) immediately after filling. Further measurements were carried out during the following hour in intervals of about 15 minutes. For the samples brought into contact with 2 and 3 equivalents of potassium tert-butoxide, two runs were carried out.

After the first hour of bringing the C5-FK containing gas mixture into contact with potassium tertbutoxide, the autoclave was placed in an oven at a temperature of 100°C and left inside the oven overnight. After this heating period, a final sample was taken and analyzed via GC-MS and via Fourier-transform infrared spectroscopy (FT-IR). Also, the "aged" potassium tertbutoxide was analyzed.

A shown in Fig. 2, C5-FK was efficiently decomposed by bringing it into contact with potassium tertbutoxide. In particular, for the samples brought into contact with 3 equivalents of potassium tertbutoxide, an entire decomposition could be achieved within about 50 minutes. Also for the other samples (brought into contact with 1 or 2 equivalents of potassium tertbutoxide, respectively), a relatively high decomposition rate was determined.

Moreover, it was found that heating (points at 60 minutes in the diagram) has a positive effect on increasing the decomposition rate, which allows entire decomposition of the sample brought into contact with 2 equivalents of potassium tertbutoxide.

The presence of an excess amount of potassium tertbutoxide not only leads to a higher C5-FK decomposition rate, but also to a lower amount of free 2H-heptafluoropropane and hexafluoropropene in the resulting gas mixture, as shown in Fig. 3 and Fig. 4. This can be explained by the potassium tertbutoxide (being present in excess amounts, briefly called KtertBu in Fig. 5) reacting with 2H-heptafluoropropane and hexafluoropropene, which was confirmed by FT-IR analysis of the solid reactant after aging, showing a strong degree of fluorination of the solid.

Thus, by using an excess amount of potassium tertbutoxide as reactant and by applying heat to the reactor, an efficient C5-FK decomposition can be achieved, whereby the presence of toxic 2H-heptafluoropropane and hexafluoropropene in the resulting gas mixture can be avoided at least approximately (i.e. kept at an amount well below 100 ppm), as further shown in Fig. 5.

Whereas according to Fig. 5 the amount of 2H-heptafluoropropane (briefly named "hepta") and hexafluoropropene (briefly named "hexa") decreases or diminishes after aging and heating, an increasing amount of isobutene ($CH_2C(CH_3)_2$) is generated. However, in contrast to 2H-heptafluoropropane and hexafluoropropene, isobutene is non-toxic. In addition, it has a GWP of far less than 1 and an ODP of 0, and can therefore be released into the atmosphere without any negative effect.

**List of reference numerals**

| | |
|---|---|
| 2 | fluoroketone decomposition system |
| 4; 41, 411 | educt container |
| 41 | tank |
| 411 | housing of apparatus |
| 6; 6a, 6b | gas line |
| 6a | primary section of gas line |
| 6b | secondary section of gas line |
| 8 | opening |
| 10 | filter |
| 12 | product container |
| 14a | vacuum pump |
| 14b | compressor |
| 16 | flowmeter |
| 18 | heating means |
| 20 | reactor |
| 21 | neutralizing substance |

## Claims

**1.** Method for decomposing a fluoroketone, in particular a fluoroketone containing exactly five carbon atoms, into disposable decomposition products, **characterized in that** the method comprises the step of bringing an initial gas mixture containing the fluoroketone into contact with a base B1 being an alcoholate, the pKa value of the respective conjugate acid being higher than 11.

**2.** Method according to claim 1, wherein the pKa value of the respective conjugate acid of the base B1 is higher than 14, and preferably is at least 17.

**3.** Method according to any of the preceding claims, the base B1 being a sterically hindered alcoholate, more particularly a tert-butoxide, and specifically potassium tert-butoxide.

**4.** Method according to any of the preceding claims, wherein the initial gas mixture is passed through a filter (10) containing the base B1.

**5.** Method according to any of the preceding claims, wherein the filter (10) is heated, in particularly to a temperature in the range from 60°C to 100°C.

**6.** Method according to any of the preceding claims, wherein after the step of bringing the fluoroketone into contact with the base B1, the decomposition products generated are subsequently brought into contact with a neutralizing substance, in particular a second base B2 different from the base B1, and more particularly an aqueous NaOH solution.

**7.** Fluoroketone decomposition system comprising a gas line (6; 6a, 6b) fluidly connectable with an educt container (4; 41, 411) containing the fluoroketone to be decomposed, said gas line (6; 6a, 6b) opening into a product container (12) for storing the decomposition products, **characterized in that** a filter (10) comprising a base B1 is arranged in the gas line (6; 6a, 6b), the base B1 being an alcoholate and the pKa value of the conjugate acid of the base B1 being higher than 11.

**8.** Fluoroketone decomposition system according to claim 7, further comprising a pump (14a) and/or a compressor (14b) to generate a gas flow from the educt container (4; 41, 411) towards the product container (12).

**9.** Fluoroketone decomposition system according to claim 7 or 8, further comprising heating means (18) allocated to the filter (10).

**10.** Fluoroketone decomposition system according to any of claims 7 to 9, wherein downstream of the filter (10) a reactor (20) comprising a neutralizing substance (21) is arranged in the gas line (6; 6a, 6b).

**11.** Assembly comprising the fluoroketone decomposition system according to any of claims 7 to 10 and an educt container (4; 41, 411).

**12.** Assembly according to claim 11, wherein the educt container is the housing (411) of an electrical apparatus.

**13.** Assembly according to claim 11 or 12, the apparatus is or is part of a: switchgear, in particular gas-insulated switchgear (GIS), or part and/or component thereof, gas-insulated line (GIL), busbar, bushing, cable, gas-insulated cable, cable joint, current transformer, voltage transformer, sensor, humidity sensor, surge arrester, capacitor, inductance, resistor, insulator, air-insulated insulator, a gas-insulated metal-encapsulated insulator, current limiter, high voltage switch, earthing switch, disconnector, combined disconnector and earthing switch, load-break switch, circuit breaker, gas circuit breaker, generator circuit breaker, gas-insulated vacuum circuit breaker, medium voltage switch, ring main unit, recloser, sectionalizer, low voltage switch, and/or any type of gas-insulated switch, transformer, distribution transformer, power transformer, tap changer, transformer bushing, electrical rotating machine, generator, motor, drive, semiconducting device, computing machine, power semiconductor device, power converter, converter station, convertor building, and components and/or combinations of such devices.

**Patentansprüche**

1. Verfahren zum Abbau eines Fluorketons, insbesondere eines Fluorketons, das genau fünf Kohlenstoffatome enthält, zu entsorgbaren Abbauprodukten, **dadurch gekennzeichnet, dass** das Verfahren den Schritt des In-Kontakt-Bringens einer Ausgangsgasmischung, das das Fluorketon enthält, mit einer Base B1, die ein Alkoholat ist, umfasst, wobei der pKa-Wert der jeweiligen Konjugatsäure höher als 11 ist.

2. Verfahren nach Anspruch 1, wobei der pKa-Wert der jeweiligen Konjugatsäure der Base B1 höher als 14 ist und vorzugsweise mindestens 17 beträgt.

3. Verfahren nach einem oder mehreren der vorhergehenden Ansprüche, wobei die Base B1 ein sterisch gehindertes Alkoholat ist, genauer ein tert-Butoxid und insbesondere Kalium-tert-butoxid.

4. Verfahren nach einem oder mehreren der vorhergehenden Ansprüche, wobei die Ausgangsgasmischung durch einen Filter (10) geleitet wird, der die Base B1 enthält.

5. Verfahren nach einem oder mehreren der vorhergehenden Ansprüche, wobei der Filter (10) erwärmt wird, genauer auf eine Temperatur im Bereich von 60 °C bis 100 °C.

6. Verfahren nach einem oder mehreren der vorhergehenden Ansprüche, wobei nach dem Schritt des In-Kontakt-Bringens des Fluorketons mit der Base B1 die erzeugten Abbauprodukte anschließend mit einer neutralisierenden Substanz in Kontakt gebracht werden, genauer einer zweiten Base B2, die sich von der Base B1 unterscheidet, und insbesondere einer wässrigen NaOH-Lösung.

7. Fluorketon-Abbausystem, umfassend eine Gasleitung (6; 6a, 6b), die fluidisch mit einem Eduktbehälter (4; 41, 411) verbunden werden kann, der das abzubauende Fluorketon enthält, wobei die Gasleitung (6; 6a, 6b) in einen Produktbehälter (12) zum Aufbewahren der Abbauprodukte mündet, **dadurch gekennzeichnet, dass** ein Filter (10), der eine Base B1 umfasst, in der Gasleitung (6; 6a, 6b) angeordnet ist, wobei die Base B1 ein Alkoholat ist und der pKa-Wert der Konjugatsäure der Base B1 höher als 11 ist.

8. Fluorketon-Abbausystem nach Anspruch 7, ferner eine Pumpe (14a) und/oder einen Verdichter (14b) umfassend, um eine Gasströmung von dem Eduktbehälter (4; 41, 411) zu dem Produktbehälter (12) hin zu erzeugen.

9. Fluorketon-Abbausystem nach Anspruch 7 oder 8, ferner Heizmittel (18) umfassend, die dem Filter (10) zugeordnet sind.

10. Fluorketon-Abbausystem nach einem oder mehreren der Ansprüche 7 bis 9, wobei prozessabwärts des Filters (10) ein Reaktor (20), der eine neutralisierende Substanz (21) umfasst, in der Gasleitung (6; 6a, 6b) angeordnet ist.

11. Anordnung, umfassend das Fluorketon-Abbausystem nach einem oder mehreren der Ansprüche 7 bis 10 und einen Eduktbehälter (4; 41, 411).

12. Anordnung nach Anspruch 11, wobei der Eduktbehälter das Gehäuse (411) einer elektrischen Vorrichtung ist.

13. Anordnung nach Anspruch 11 oder 12, wobei die Vorrichtung Folgendes oder ein Teil von Folgendem ist:

    eine Schaltanlage, genauer eine gasisolierte Schaltanlage (GIS) oder ein Teil und/oder Bauteil davon,
    eine gasisolierte Leitung (GIL), ein Sammelleiter, eine Durchführung, ein Kabel, ein gasisoliertes Kabel, eine Kabelverbindung, ein Stromwandler, ein Spannungswandler,
    ein Sensor, ein Feuchtigkeitssensor, ein Überspannungsableiter, ein Kondensator, ein induktiver Widerstand, ein Widerstand, ein Isolator, ein luftisolierter Isolator, ein gasisolierter, metallverkapselter Isolator, ein Strombegrenzer, ein Hochspannungsschalter, ein Erdungsschalter, ein Trennschalter, ein kombinierter Trenn- und
    Erdungsschalter, ein Lasttrennschalter, ein Schutzschalter, ein Gasschutzschalter, ein Generatorschutzschalter, ein gasisolierter Vakuumschutzschalter, ein Mittelspannungsschalter, ein Ringleitungsnetz, ein Kurzunterbrecher, ein Abschnittstrennschalter, ein Niederspannungsschalter und/oder eine beliebige Art von gasisoliertem Schalter, Wandler, Verteilungswandler, Leistungswandler, Stufenschaltwerk, Transformatordurchführung, drehender elektrischer Maschine, Generator, Motor, Antrieb, Halbleiterbauelement, Rechenmaschine, Leistungshalbleiterbauelement, Leistungsumsetzer, Umformstation, Umformgebäude und Bauteile und/oder Kombinationen derartiger Vorrichtungen.

**Revendications**

1. Procédé de décomposition d'une fluorocétone, en particulier d'une fluorocétone contenant exactement cinq atomes de carbone, en produits de décomposition jetables, **caractérisé en ce que** le procédé comprend l'étape de mise en contact d'un mélange gazeux initial contenant la fluorocétone avec une base B1 qui est un alcoolate, la valeur de pKa de l'acide conjugué respectif étant supérieure à 11.

**2.** Procédé selon la revendication 1, dans lequel la valeur de pKa de l'acide conjugué respectif de la base B1 est supérieure à 14, et de préférence vaut au moins 17.

**3.** Procédé selon l'une quelconque des revendications précédentes, la base B1 étant un alcool stériquement encombré, plus particulièrement un tert-butoxyde, et spécifiquement le tert-butoxyde de potassium.

**4.** Procédé selon l'une quelconque des revendications précédentes, dans lequel on fait passer le mélange gazeux initial à travers un filtre (10) contenant la base B1.

**5.** Procédé selon l'une quelconque des revendications précédentes, dans lequel on chauffe le filtre (10), en particulier jusqu'à une température dans la gamme de 60 °C à 100 °C.

**6.** Procédé selon l'une quelconque des revendications précédentes dans lequel, après l'étape de mise en contact de la fluorocétone avec la base B1, on met ensuite en contact les produits de décomposition générés avec une substance neutralisante, en particulier une deuxième base B2 différente de la base B1, et plus particulièrement une solution aqueuse de NaOH.

**7.** Système de décomposition de fluorocétone comprenant une conduite de gaz (6; 6a, 6b) raccordable fluidiquement à un récipient de réactifs (4; 41, 411) contenant la fluorocétone à décomposer, ladite conduite de gaz (6; 6a, 6b) s'ouvrant à l'intérieur d'un récipient de produits (12) destiné à stocker les produits de décomposition, **caractérisé en ce qu'**un filtre (10) comprenant une base B1 est disposé dans la conduite de gaz (6; 6a, 6b), la base B1 étant un alcoolate et la valeur de pKa de l'acide conjugué de la base B1 étant supérieure à 11.

**8.** Système de décomposition de fluorocétone selon la revendication 7, comprenant en outre une pompe (14a) et/ou un compresseur (14b) pour générer un écoulement gazeux depuis le récipient de réactifs (4; 41, 411) vers le récipient de produits (12).

**9.** Système de décomposition de fluorocétone selon la revendication 7 ou 8, comprenant en outre des moyens de chauffage (18) affectés au filtre (10).

**10.** Système de décomposition de fluorocétone selon l'une quelconque des revendications 7 à 9 dans lequel, en aval du filtre (10), un réacteur (20) comprenant une substance neutralisante (21) est disposé dans la conduite de gaz (6; 6a, 6b).

**11.** Ensemble comprenant le système de décomposition de fluorocétone selon l'une quelconque des revendications 7 à 10 et un récipient de réactifs (4; 41, 411).

**12.** Ensemble selon la revendication 11, dans lequel le récipient de réactifs est le boîtier (411) d'un appareil électrique.

**13.** Ensemble selon la revendication 11 ou 12, l'appareil étant ou faisant partie d'un appareillage de commutation, en particulier un appareillage de commutation isolé au gaz (GIS), ou une partie et/ou un composant de celui-ci, une ligne isolée au gaz (GIL), une barre omnibus, une traversée, un câble, un câble isolé au gaz, une jonction de câbles, un transformateur de courant, un transformateur de tension, un capteur, un capteur d'humidité, un parasurtenseur, un condensateur, une bobine d'induction, une résistance, un isolateur, un isolateur isolé à l'air, un isolateur encapsulé dans du métal isolé au gaz, un limiteur de courant, un commutateur haute tension, un commutateur de mise à la terre, un sectionneur, un sectionneur et commutateur de mise à la terre combiné, un interrupteur à coupure en charge, un disjoncteur, un disjoncteur au gaz, un disjoncteur de générateur, un disjoncteur sous vide isolé au gaz, un commutateur moyenne tension, une unité de réseau électrique bouclé, un disjoncteur à réenclenchement, un sectionnaliseur, un commutateur basse tension, et/ou tout type de commutateur isolé au gaz, un transformateur, un transformateur de distribution, un transformateur de puissance, un commutateur à prises de réglage, une traversée de transformateur, une machine électrique tournante, un générateur, un moteur, une transmission, un dispositif semi-conducteur, un calculateur, un dispositif semi-conducteur de puissance, un convertisseur de puissance, un poste de transformation, un bâtiment de transformateurs, et les composants et/ou combinaisons de tels dispositifs.

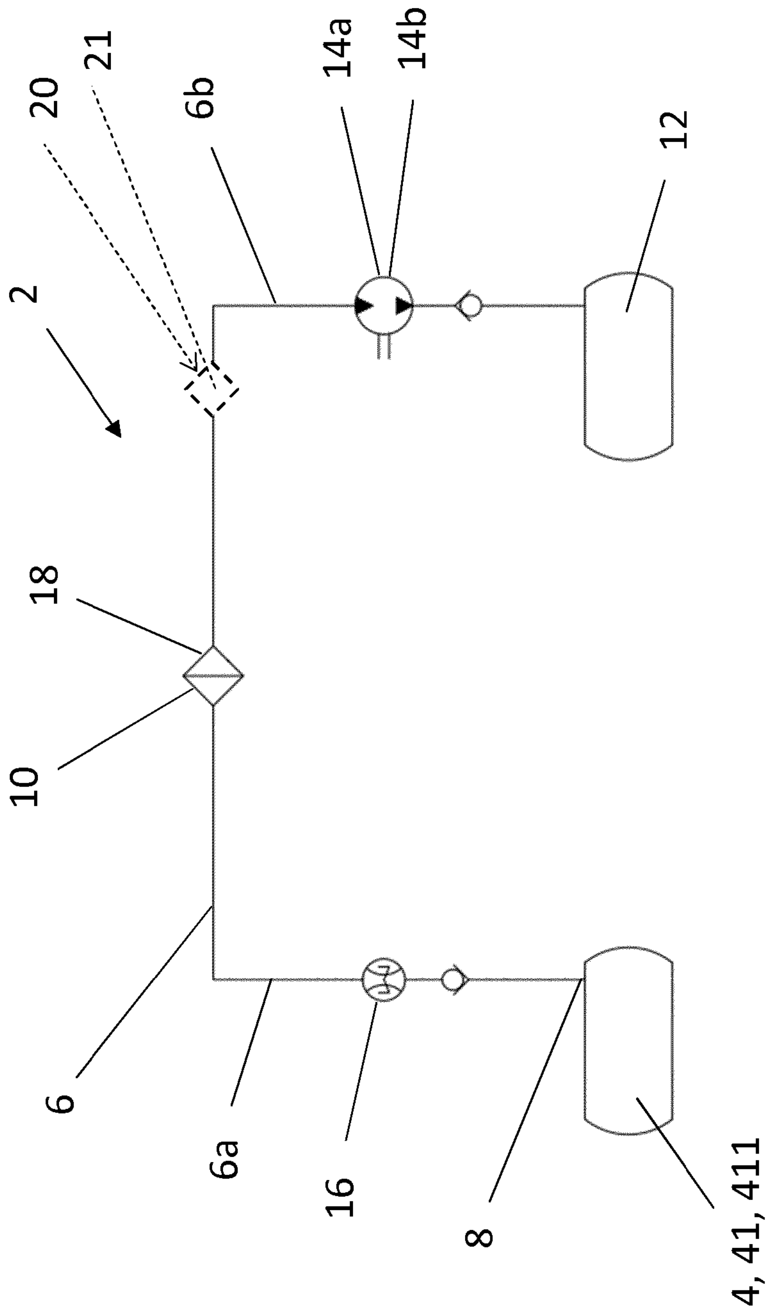


Fig. 1

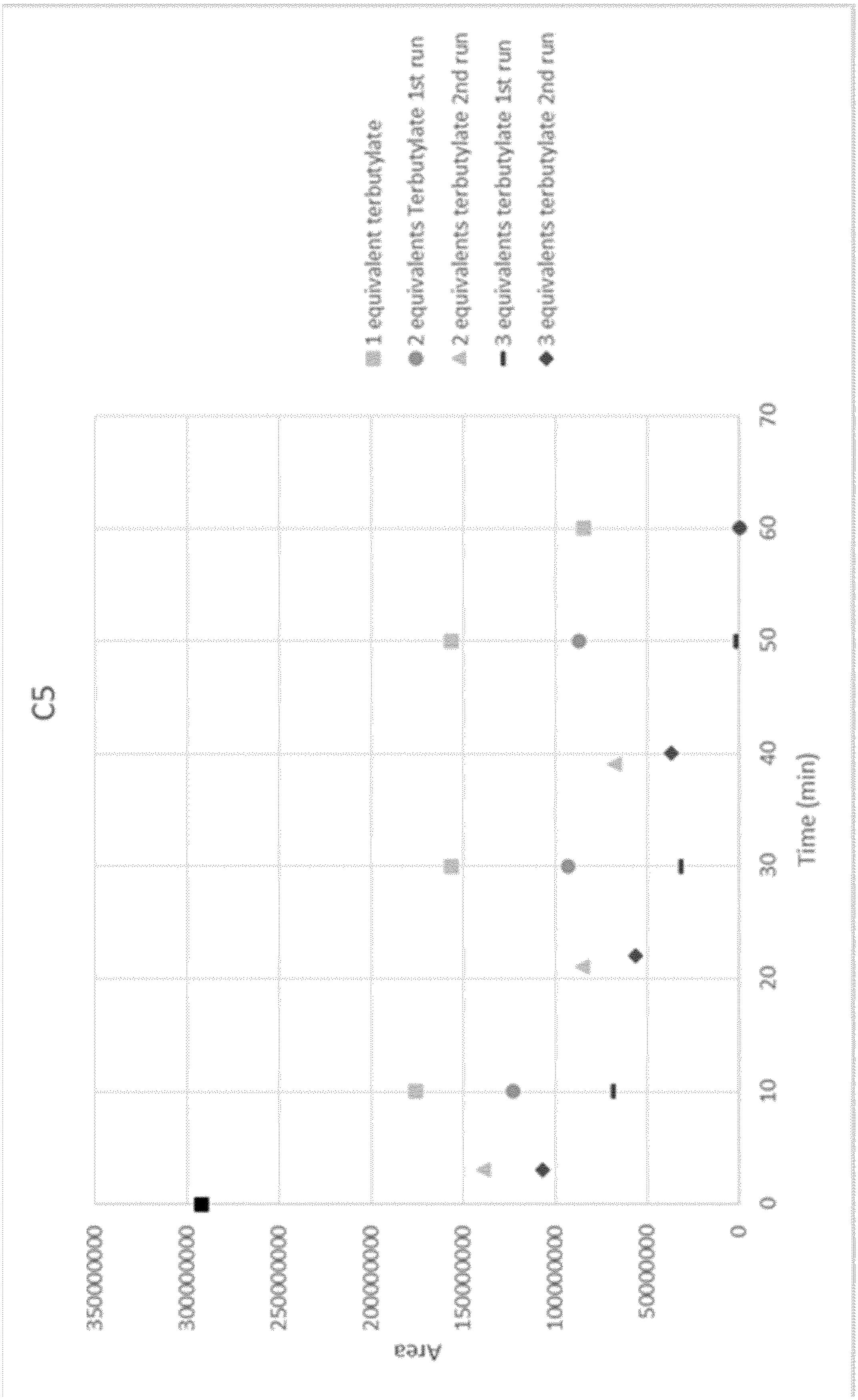
C5
Area
350000000
300000000
250000000
200000000
150000000
100000000
50000000
0
0
10
20
30
40
50
60
70
Time (min)
1 equivalent terbutylate
2 equivalents Terbutylate 1st run
2 equivalents terbutylate 2nd run
3 equivalents terbutylate 1st run
3 equivalents terbutylate 2nd run

Fig. 2

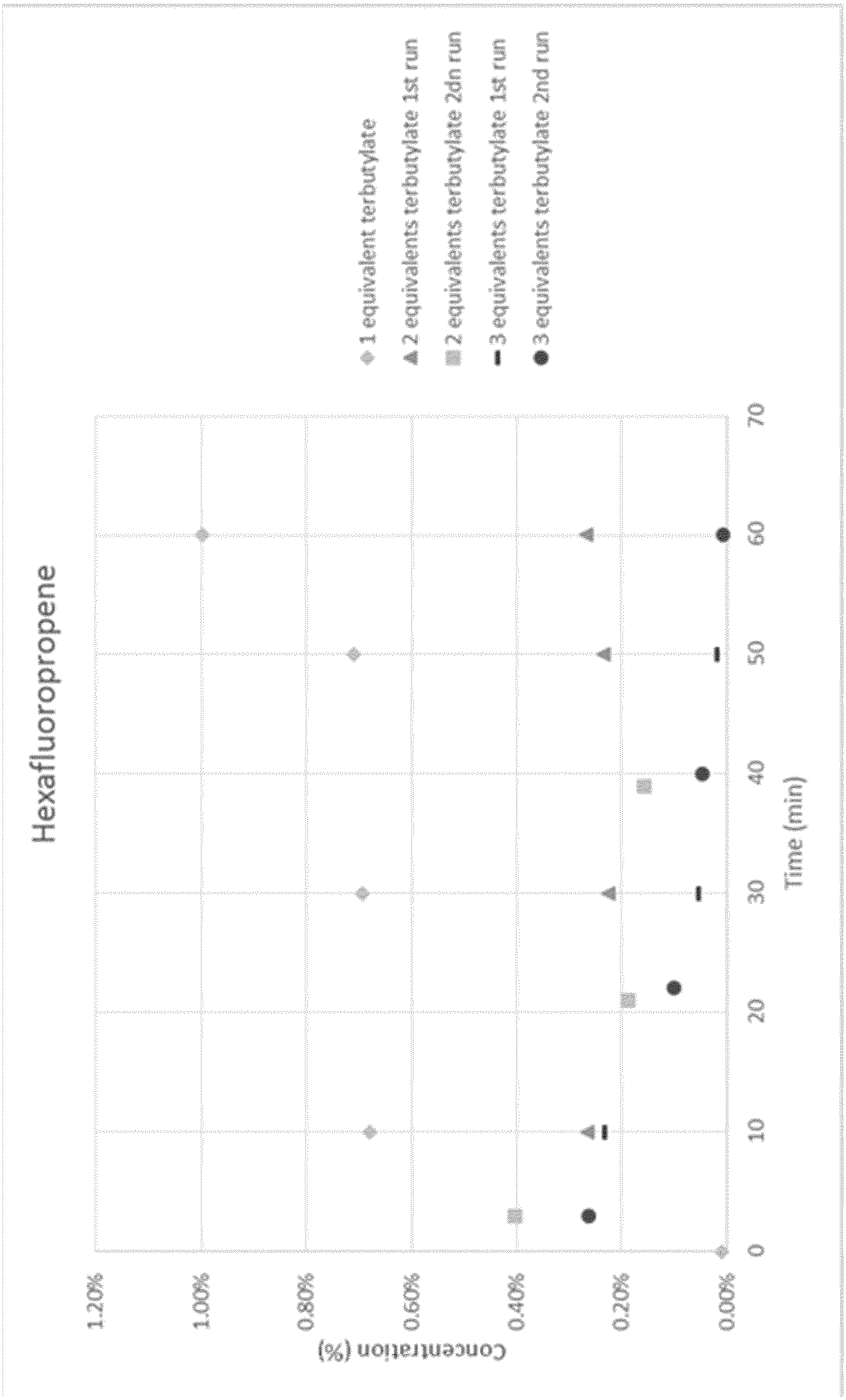
Hexafluoropropene
Concentration (%)
1.20%
1.00%
0.80%
0.60%
0.40%
0.20%
0.00%
0
10
20
30
40
50
60
70
Time (min)
1 equivalent terbutylate
2 equivalents terbutylate 1st run
2 equivalents terbutylate 2dn run
3 equivalents terbutylate 1st run
3 equivalents terbutylate 2nd run

Fig. 3

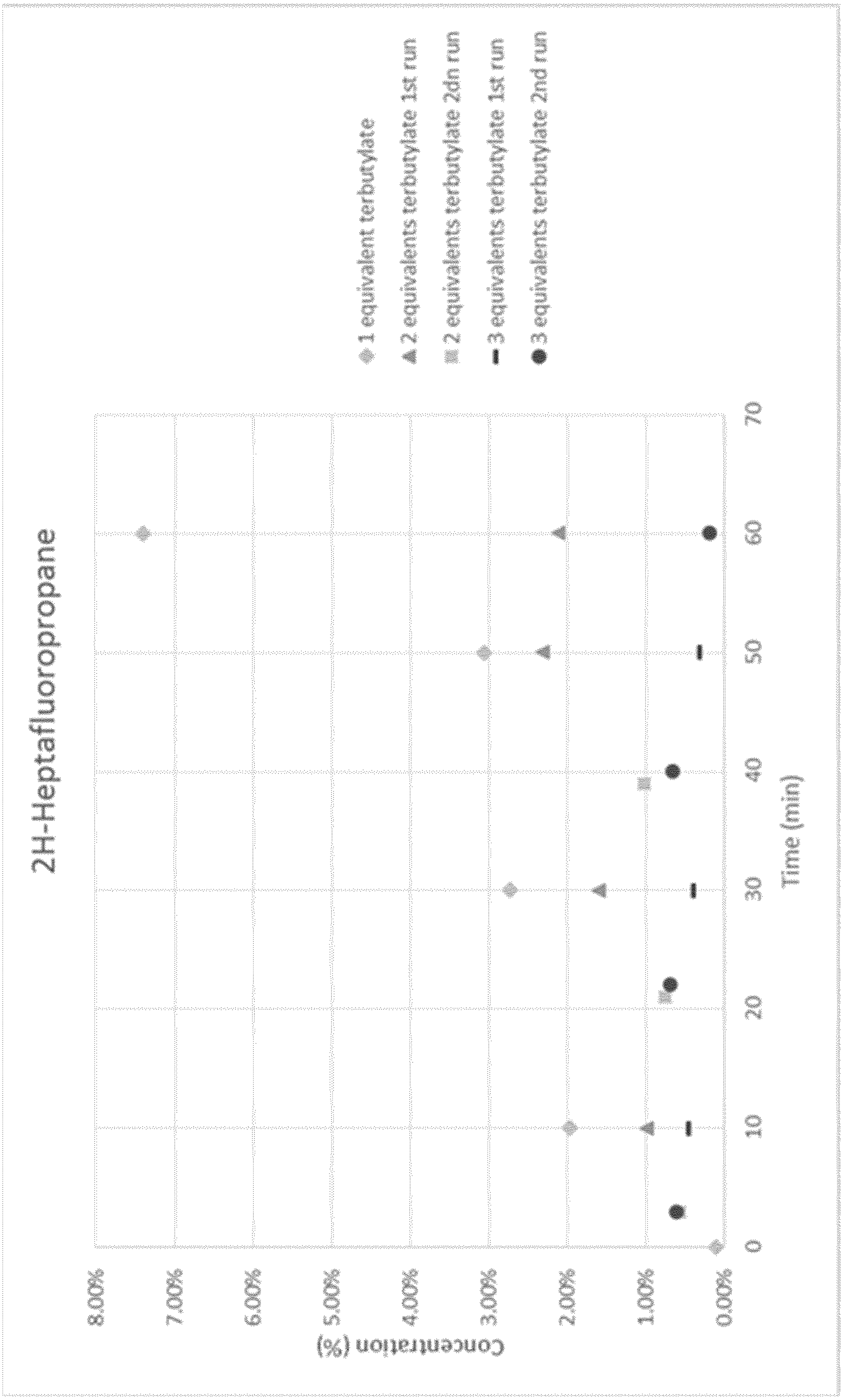
2H-Heptafluoropropane
Concentration (%)
8.00%
7.00%
6.00%
5.00%
4.00%
3.00%
2.00%
1.00%
0.00%
0
10
20
30
40
50
60
70
Time (min)
1 equivalent terbutylate
2 equivalents terbutylate 1st run
2 equivalents terbutylate 2dn run
3 equivalents terbutylate 1st run
3 equivalents terbutylate 2nd run

Fig. 4

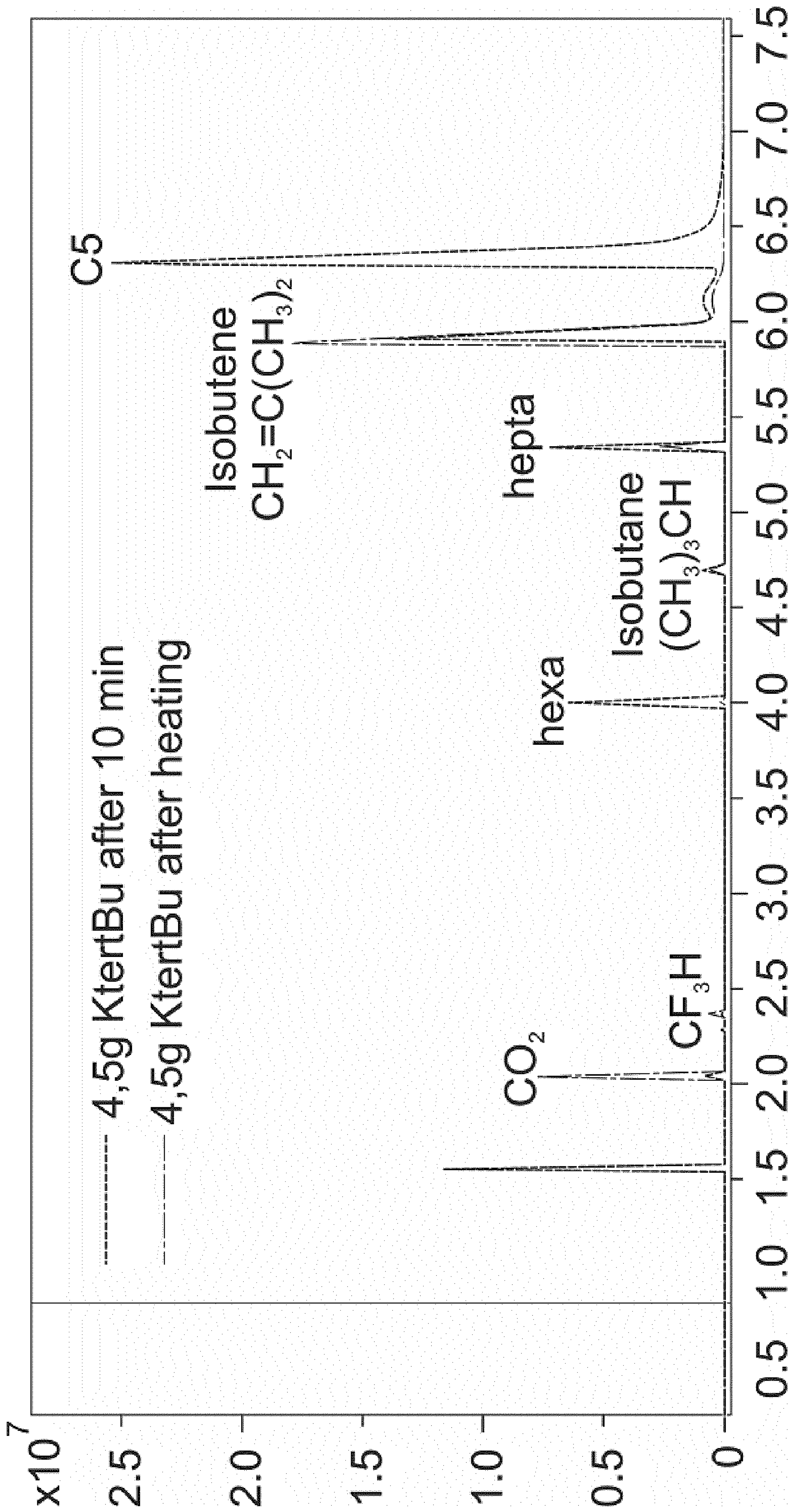
x10^7
2.5
2.0
1.5
1.0
0.5
0
0.5
1.0
1.5
2.0
2.5
3.0
3.5
4.0
4.5
5.0
5.5
6.0
6.5
7.0
7.5
4,5g KtertBu after 10 min
4,5g KtertBu after heating
C5
Isobutene
$CH_2=C(CH_3)_2$
hepta
Isobutane
$(CH_3)_3CH$
hexa
$CF_3H$
$CO_2$

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010142346 A
- WO 2012080246 A
- WO 2017029338 A
- EP 0771579 A1
- US 2807646 A
- EP 2904617 A